# EUROPEAN PATENT APPLICATION

(11) **EP 4 411 506 A1**
(43) Date of publication of application: **07.08.2024**
(21) Application number: 24154065.7
(22) Date of filing: 26.01.2024
(51) Int. Cl.: G05D 1/224, G05D 1/227, G05D 1/648, G05D 105/15, G05D 107/20, G05D 109/10, A01B 69/00

(54) **ROUTE GENERATION METHOD, ROUTE GENERATION SYSTEM, AND ROUTE GENERATION PROGRAM**

(30) Priority: 03.02.2023 JP 2023014959
(71) Applicant: Yanmar Holdings Co., Ltd., Osaka-shi, Osaka (JP)
(72) Inventor: SASAKI, Tsubasa, Osaka-shi (JP); TAKAHASHI, Mamoru, Osaka-shi (JP); NISHINO, Mitsuya, Osaka-shi (JP); NISHII, Yasuto, Okayama-shi (JP); NISHIBEPPU, Shinya, Okayama-shi (JP)
(74) Representative: Dennemeyer & Associates S.A.

(57) **Abstract**

[Problem] To provide a route generation method, a route generation system, and a route generation program capable of improving work accuracy by a work vehicle that is able to travel automatically in accordance with a target route. [Solution] The automatic traveling system 100 includes a generation processing unit 212, an acquisition processing unit 213, and a correction processing unit 214. The generation processing unit 212 generates a target route R along which the work vehicle 10 is caused to travel automatically. The acquisition processing unit 213 acquires a correction position of the target route R. The correction processing unit 214 corrects the target route R based on the correction position.

## Description

### TECHNICAL FIELD

The present invention relates to a route generation method, a route generation system, and a route generation program that generate a route (target route) along which a work vehicle is caused to travel automatically.

### BACKGROUND ART

Conventionally, there is known a work vehicle that travels automatically in a field in accordance with a target route set in advance. For example, a system is known that generates a route from a work start position to a work end position before causing a work vehicle to start automatic traveling and causes the work vehicle to execute automatic traveling in accordance with the generated route (see, for example, Patent Document 1).

### PRIOR ART DOCUMENT

### PATENT DOCUMENT

Patent Document 1: Japanese Unexamined Patent Publication No. 2022-82624

### SUMMARY OF INVENTION

### TECHNICAL PROBLEM

When the work vehicle is caused to travel automatically in accordance with the target route, the target route set in advance may be inappropriate due to the influence of the state of the field and the state of work objects (e.g., crops).

For example, in a case where a target route generated for a field in which harvest work is to be performed deviates from a position of the crops, when a work vehicle travels automatically in accordance with the target route, the crops cannot be harvested or the crops may be trampled, which causes a problem of a decrease in work accuracy.

An object of the present invention is to provide a route generation method, a route generation system, and a route generation program capable of improving work accuracy by a work vehicle that is able to travel automatically in accordance with a target route.

### SOLUTION TO PROBLEM

A route generation method according to the present invention is a method including generating a target route along which a work vehicle is caused to travel automatically, acquiring a correction position of the target route, and correcting the target route based on the correction position.

A route generation system according to the present invention includes a generation processing unit that generates a target route along which a work vehicle is caused to travel automatically, an acquisition processing unit that acquires a correction position of the target route, and a correction processing unit that corrects the target route based on the correction position.

A route generation program according to the present invention is a program for causing one or more processors to execute: generating a target route along which a work vehicle is caused to travel automatically; acquiring a correction position of the target route; and correcting the target route based on the correction position.

### ADVANTAGEOUS EFFECTS OF INVENTION

According to the present invention, it is possible to provide a route generation method, a route generation system, and a route generation program capable of improving work accuracy by a work vehicle that is able to travel automatically in accordance with a target route.

### BRIEF DESCRIPTION OF DRAWINGS

FIG. 1 is a block diagram illustrating a configuration of an automatic traveling system according to an embodiment of the present invention.
FIG. 2 is an external view illustrating a configuration of a work vehicle according to the embodiment of the present invention.
FIG. 3 is a diagram illustrating an example of a target route set in a field according to the embodiment of the present invention.
FIG. 4 is a diagram illustrating an example of a menu screen displayed on an operation terminal according to the embodiment of the present invention.
FIG. 5 is a diagram illustrating an example of an operation screen displayed on the operation terminal according to the embodiment of the present invention.
FIG. 6 is a diagram illustrating the target route and an example of work rows according to the embodiment of the present invention.
FIG. 7 is a diagram showing a state in which positions of the target route and the work rows are deviated according to the embodiment of the present invention.
FIG. 8 is a diagram illustrating an example of a target route after correction according to the embodiment of the present invention.
FIG. 9 is a diagram illustrating another example of the operation screen displayed on the operation terminal according to the embodiment of the present invention.
FIG. 10 is a flowchart illustrating an example of a procedure of automatic traveling processing executed by the automatic traveling system according to the embodiment of the present invention.
FIG. 11A is a diagram illustrating an example of a route correction screen displayed on an operation terminal according to an embodiment of the present invention.
FIG. 11B is a diagram illustrating another example of a route correction screen displayed on the operation terminal according to an embodiment of the present invention.
FIG. 12 is a diagram illustrating another example of a target route after correction according to an embodiment of the present invention.
FIG. 13A is a diagram illustrating an example of a correcting method of the target route according to an embodiment of the present invention.
FIG. 13B is a diagram illustrating another example of a correcting method of the target route according to an embodiment of the present invention.
FIG. 14A is a diagram illustrating a state in which orientations (azimuths) of the target route and the work rows are deviated according to an embodiment of the present invention.
FIG. 14B is a diagram illustrating an example of a target route after correction according to an embodiment of the present invention.
FIG. 15 is a diagram illustrating another example of a correcting method of the target route according to an embodiment of the present invention.
FIG. 16 is a diagram illustrating still another example of a correcting method of the target route according to an embodiment of the present invention.
FIG. 17 is a diagram illustrating still another example of a correcting method of the target route according to an embodiment of the present invention.

### DESCRIPTION OF EMBODIMENTS

The following embodiments are examples embodying the present invention, and are not intended to limit the technical scope of the present invention.

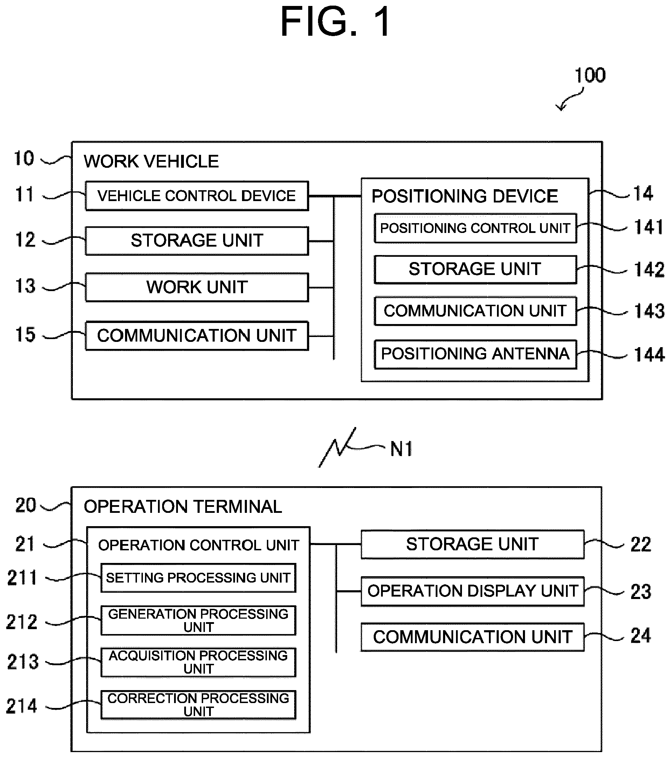

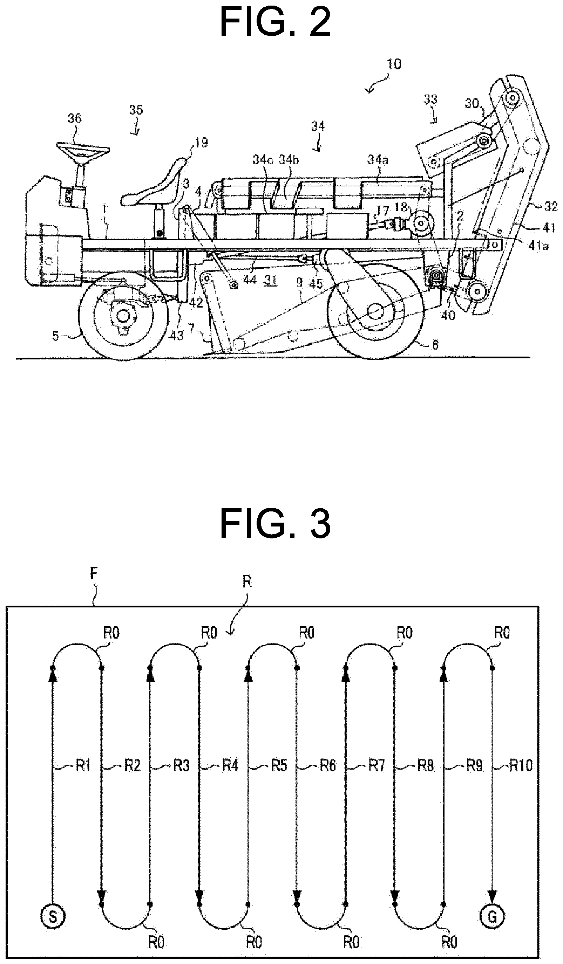

As illustrated in FIGS. 1 and 2, an automatic traveling system 100 according to an embodiment of the present invention includes a work vehicle 10 and an operation terminal 20. The work vehicle 10 and the operation terminal 20 can communicate with each other via a communication network N1. For example, the work vehicle 10 and the operation terminal 20 can communicate with each other via a mobile phone line network, a packet line network, or a wireless LAN. The automatic traveling system 100 is a system capable of causing the work vehicle 10 to travel automatically in a work area (e.g., a field F in FIG. 3).

The work vehicle of the present invention is a vehicle that performs specific work in the work area (field F), such as a tractor, a combine harvester, or a rice transplanter. In the present embodiment, a case where the work vehicle 10 is a vehicle (e.g., a potato harvester) that harvests crops (e.g., potatoes) which are work objects will be described as an example.

The work vehicle 10 is configured to be able to travel automatically (travel autonomously) in the field F (see FIG. 3) in accordance with a preset target route R (work routes R1 to R10 and turning routes R0). For example, the work vehicle 10 can travel automatically along the target route R that is generated for the field F in advance based on position information about a current position of the work vehicle 10, which is positioned by a positioning device 14.

Further, for example, in the work area of the field F illustrated in FIG. 3, the work vehicle 10 harvests potatoes while traveling back and forth in parallel along the work routes R1 to R10 from a work start position S to a work end position G. The target route R is not limited to the route illustrated in FIG. 3, and is set as appropriate according to a shape of the field F, a content of the work, and the like.

The operation terminal 20 displays various types of information related to work performed by the work vehicle 10, and accepts an operation of a user (operator) to execute processing in response to the operation. For example, the operator operates the operation terminal 20 to set information necessary for automatic traveling or output a start instruction of automatic traveling to the work vehicle 10. In addition, the operation terminal 20 displays information such as a working state and a traveling state of the work vehicle 10 during automatic traveling. The operator can grasp the working state and the traveling state at the operation terminal 20.

The operation terminal 20 may be mountable on (detachable from) the work vehicle 10. In this case, the operator can operate the operation terminal 20 while boarding the work vehicle 10. For example, the operator can board the work vehicle 10 and operate the operation terminal 20 so that the operator can switch to manual steering to cause the work vehicle 10 to travel manually or correct the target route R.

### [Work Vehicle 10]

As illustrated in FIGS. 1 and 2, the work vehicle 10 includes a vehicle control device 11, a storage unit 12, a work unit 13, a positioning device 14, a communication unit 15, and the like. The vehicle control device 11 is electrically connected to the storage unit 12, the work unit 13, the positioning device 14, and the like. The vehicle control device 11 and the positioning device 14 can communicate with other devices wirelessly.

The communication unit 15 is a communication interface that connects the work vehicle 10 to the communication network N1 in a wired or wireless manner so as to execute data communication in accordance with a predetermined communication protocol with an external device such as the operation terminal 20 via the communication network N1.

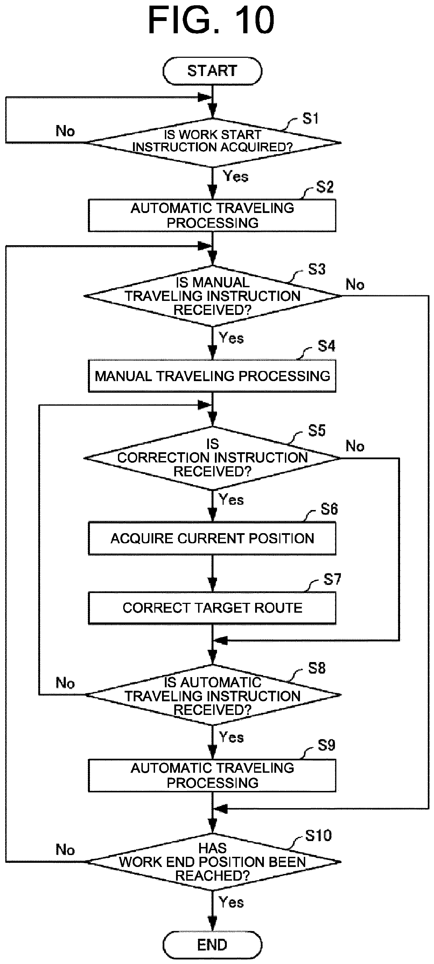

The storage unit 12 is a non-volatile storage unit that stores various types of information, such as a hard disk drive (HDD), a solid state drive (SSD), or a flash memory. The storage unit 12 stores control programs such as an automatic traveling program to cause the vehicle control device 11 to execute automatic traveling processing (see FIG. 10). For example, the automatic traveling program is non-transiently recorded on a computer-readable recording medium such as a CD or a DVD, read by a predetermined reading device (not illustrated), and stored in the storage unit 12. Note that the automatic traveling program may be downloaded from a server (not illustrated) via the communication network N1 to the work vehicle 10 and stored in the storage unit 12. In addition, the storage unit 12 stores data (route data) of the target route R generated in the operation terminal 20.

The work unit 13 includes a digging and conveying device 31, a vertical conveying device 32, a soil dropping device 33, a sorting device 34, and the like. As illustrated in FIG. 2, a driver's seat 35 and an engine room are provided on a front end of a chassis 1, a mounting frame 2 is provided on a rear part of the chassis 1, and a rear end of the digging and conveying device 31 is pivotally supported on a lower end of the mounting frame 2. The digging and conveying device 31 is arranged between front wheels 5 and rear wheels 6. The digging and conveying device 31 is disposed between a front upper part of the digging and conveying device 31 and a support frame 3 erected on the chassis 1 at a rear part of the driver's seat 35 in such a way to be elevated and lowered via a hydraulic cylinder 4.

An upper end of a digger 7 is pivotally supported on the front upper part of the digging and conveying device 31, a lower part of the digger 7 is oscillated and vibrated by a motor to lift up and dig up potatoes, and a conveyor 9 is arranged from a rear part of the lower part of the digger 7 to a pivotally supporting part of the rear end of the digging and conveying device 31. The conveyor 9 includes a wide roller chain, and is configured to drop soil by vibration during conveyance.

A lower part of the vertical conveying device 32 is pivotally supported on a rear end of the chassis 1, and the vertical conveying device 32 is formed in a shape of "KU" in Japanese HIRAGANA in a side view and winds around a conveyor 41. The conveyor 41 includes a large number of tines 41a, and is configured to be able to convey potatoes. A lower end of the conveyor 41 is disposed behind the conveyor 9, and a delivery fork 40 is provided between a rear end of the conveyor 9 and a lower end of the vertical conveying device 32.

A delivery gutter 30 is provided in front of a "KU", in Japanese HIRAGANA, shaped bending portion of an upper part of the vertical conveying device 32, and the delivery gutter 30 is pivotally supported at a front lower end thereof so as to rotate freely, and is configured to receive potatoes from the tines 41a of the conveyor 41.

The soil dropping device 33 is arranged in front of the delivery gutter 30, and the sorting device 34 is provided behind a seat 19 from a terminal end of the soil dropping device 33.

The front wheels 5 are driven by power transmitted to a front differential case from a transmission case 43 projecting forward and downward from a mission case 42. The rear wheels 6 are driven by power transmitted to a rear differential case 45 via a universal joint 44 from a rear surface of the mission case 42.

In addition, power is transmitted from a PTO shaft projecting from the rear surface of the mission case 42 to a gear case 18 via a universal joint 17, drives the sorting device 34 and the digging and conveying device 31 via a belt from a pulley fixed to an output shaft of the gear case 18, drives a sprocket fixed to a drive shaft at the lower end of the vertical conveying device 32 from a sprocket fixed to a drive shaft of the digging and conveying device 31, and drives the soil dropping device 33 via a chain from a driven sprocket at an upper end of the vertical conveying device 32.

In the sorting device 34, chairs on which sorting workers are seated are fixed on the chassis 1 on both sides of a central part. The sorting device 34 includes a roller chain 34a, and a plurality of partition plates for feeding and separating potatoes picked up and sorted by the sorting workers are provided on the roller chain 34a. A chute 34b is provided at terminal ends of the partition plates, and a container 34c is arranged below the chute 34b.

A steering wheel 36 is an operation unit operated by the operator or the vehicle control device 11.

For example, the angle of the front wheels 5 is changed by a non-illustrated hydraulic power steering mechanism or the like according to the operation of the steering wheel 36 by the vehicle control device 11, thereby to change an advancing direction of the work vehicle 10. For example, the steering wheel 36 is actuated by automatic steering performed by the vehicle control device 11 when a traveling mode is set to an automatic traveling mode, and is actuated by manual steering performed by the operator when the traveling mode is set to a manual traveling mode.

In addition, the work unit 13 includes a shift lever, an accelerator, a brake, and the like (not illustrated) which are operated by the vehicle control device 11. According to an operation of the shift lever by the vehicle control device 11, a transmission gear is switched to a forward gear, a backward gear, or the like, and the traveling mode of the work vehicle 10 is switched to forward, backward, or the like. In addition, the vehicle control device 11 operates the accelerator to control a rotational frequency of an engine. In addition, the vehicle control device 11 operates the brake to brake rotation of the front wheels 5 and the rear wheels 6 by using an electromagnetic brake.

The positioning device 14 is a communication device including a positioning control unit 141, a storage unit 142, a communication unit 143, a positioning antenna 144, and the like. For example, the positioning device 14 is provided at the driver's seat 35. An installation location of the positioning device 14 is not limited to the driver's seat 35. In addition, the positioning control unit 141, the storage unit 142, the communication unit 143, and the positioning antenna 144 may be separately disposed at different positions in the work vehicle 10. Note that a battery is connected to the positioning device 14, and the positioning device 14 can operate even when the engine is being stopped. In addition, as the positioning device 14, for example, a mobile phone terminal, a smartphone, a tablet terminal, the operation terminal 20, or the like may be substituted.

The communication unit 143 is a communication interface that connects the positioning device 14 to the communication network N1 in a wired or wireless manner so as to execute data communication in accordance with a predetermined communication protocol with an external device such as a base station server via the communication network N1.

The positioning antenna 144 is an antenna that receives radio waves (GNSS signals) transmitted from a satellite.

The positioning control unit 141 is a computer system that includes one or more processors, and storage memories such as a non-volatile memory and a RAM. The storage unit 142 is a non-volatile memory or the like that stores a control program for causing the positioning control unit 141 to execute positioning processing and data such as positioning information and movement information. For example, the control program is non-transiently recorded on a computer-readable recording medium such as a CD or a DVD, read by a predetermined reading device (not illustrated), and stored in the storage unit 142. Note that the control program may be downloaded from a server (not illustrated) via the communication network N1 to the positioning device 14 and stored in the storage unit 142.

The positioning control unit 141 calculates the position (current position) of the work vehicle 10 based on the GNSS signal that is received by the positioning antenna 144 from the satellite. For example, in a case where the work vehicle 10 travels automatically in the field F, when the positioning antenna 144 receives radio waves (transmission time, orbit information, etc.) respectively transmitted from multiple satellites, the positioning control unit 141 calculates a distance between the positioning antenna 144 and each of the satellites and calculates a current position (latitude and longitude) of the work vehicle 10 based on the calculated distance. In addition, the positioning control unit 141 may perform positioning by a real-time kinematic method (RTK-GNSS positioning method (RTK method)) in which the current position of the work vehicle 10 is calculated using correction information corresponding to a base station (reference station) close to the work vehicle 10. In this way, the work vehicle 10 travels automatically using, for example, positioning information based on the RTK method.

The vehicle control device 11 has control devices such as a CPU, a ROM, and a RAM. The CPU is a processor that executes various types of arithmetic processing. The ROM is a non-volatile storage unit that previously stores control programs such as a BIOS and an OS for causing the CPU to execute various types of arithmetic processing. The RAM is a volatile or non-volatile storage unit that stores various types of information and is used as a temporary storage memory (work region) for various types of processing executed by the CPU. The vehicle control device 11 controls the work vehicle 10 by causing the CPU to execute various control programs previously stored in the ROM or the storage unit 12.

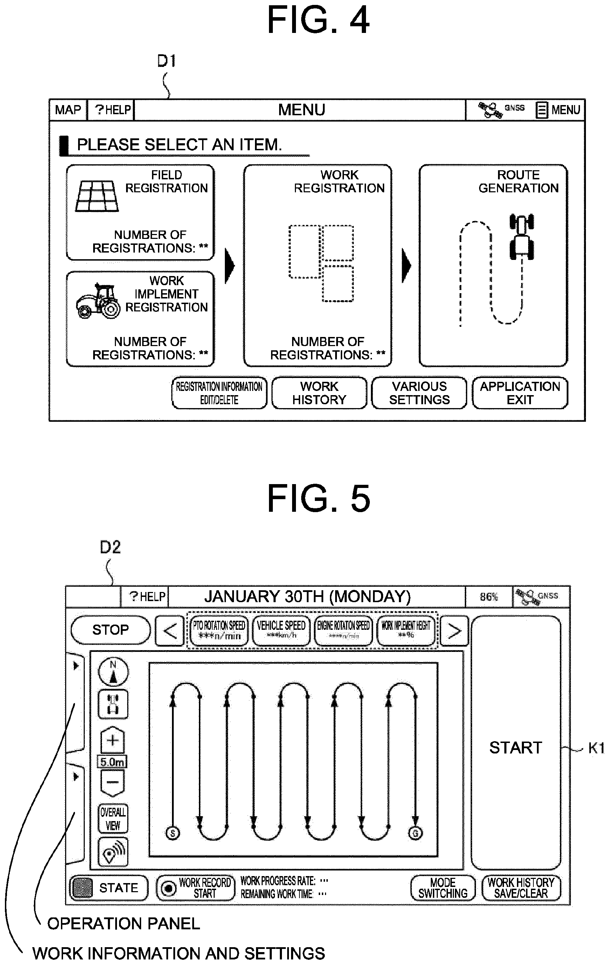

Specifically, the vehicle control device 11 causes the work vehicle 10 to travel automatically based on the position information indicating the position of the work vehicle 10 which is positioned by the positioning control unit 141. For example, when the positioning state becomes a high-accuracy state in which RTK positioning can be performed (high-accuracy positioning completion) and the operator presses a start button K1 (see FIG. 5) in the operation terminal 20, the operation terminal 20 outputs a work start instruction to the work vehicle 10. When the work start instruction is acquired from the operation terminal 20, the vehicle control device 11 causes the work vehicle 10 to start automatic traveling based on the position information indicating the position of the work vehicle 10 which is positioned by the positioning control unit 141. As a result, the work vehicle 10 starts automatic traveling in accordance with the target route R (see FIG. 3), and starts work (e.g., potato harvest work) by the work unit 13. The target route R along which the work vehicle 10 travels is generated in advance by, for example, the operation terminal 20. The work vehicle 10 acquires route data of the target route R from the operation terminal 20, and travels automatically in the field F from the work start position S to the work end position G in accordance with the target route R.

In addition, the vehicle control device 11 stops the automatic traveling of the work vehicle 10 when a traveling stop instruction is acquired from the operation terminal 20. For example, when the operator presses a stop button on the operation terminal 20, the operation terminal 20 outputs a traveling stop instruction to the work vehicle 10. When acquiring the traveling stop instruction from the operation terminal 20, the vehicle control device 11 stops the automatic traveling of the work vehicle 10. Accordingly, the work vehicle 10 stops the automatic traveling and stops the work with the work unit 13.

In a case where an operator boards the work vehicle 10 and causes the work vehicle 10 to perform automatic traveling and work, the operation terminal 20 is installed on the driver's seat 35 of the work vehicle 10, and the operator can operate the operation terminal 20 from the driver's seat 35.

Although not illustrated in the figure, the work vehicle 10 may further include an obstacle sensor and a camera. The obstacle sensor is a sensor that detects obstacles in a predetermined detection area by using infrared rays, ultrasonic waves, or the like.

In addition, the camera is a digital camera that captures an image of an object and outputs the image as digital image data. The camera continuously captures images of the object at a predetermined frame rate, generates frame images with a predetermined resolution, and transmits the frame images to the vehicle control device 11. For example, the camera captures an image of crops (potatoes) that are work objects.

The vehicle control device 11 acquires measurement information from the obstacle sensor and acquires captured images from the camera. When an obstacle is detected, the vehicle control device 11 causes the work vehicle 10 to perform avoidance traveling or stop so as not to come into contact with the obstacle. In addition, the vehicle control device 11 also outputs image data of the captured images acquired from the camera to the operation terminal 20. When acquiring the image data, the operation terminal 20 displays the captured images on an operation screen.

### [Operation Terminal 20]

As illustrated in FIG. 1, the operation terminal 20 is an information processing device including an operation control unit 21, a storage unit 22, an operation display unit 23, and a communication unit 24. The operation terminal 20 may be a portable terminal such as a tablet terminal or a smartphone.

The communication unit 24 is a communication interface that connects the operation terminal 20 to the communication network N1 in a wired or wireless manner so as to execute data communication in accordance with a predetermined communication protocol with external devices such as one or more work vehicles 10 via the communication network N1.

The operation display unit 23 is a user interface that includes a display unit, such as a liquid crystal display or an organic EL display, that displays various types of information, and an operation unit, such as a touch panel, a mouse, or keyboard, that accepts operations. The operator can perform an operation of setting and registering various pieces of information (work vehicle information, field information, work information, and the like described below) by operating the operation unit on an operation screen displayed on the display unit. In addition, the operator can issue a work start instruction, a traveling stop instruction, a correction instruction of the target route R, and the like to the work vehicle 10 by operating the operation unit. Furthermore, at a location away from the work vehicle 10, the operator can check the traveling state, the working state, and the like of the work vehicle 10 that travels automatically in the field F in accordance with the target route R, based on the information displayed on the operation terminal 20.

The storage unit 22 is a non-volatile storage unit such as an HDD, an SSD, or a flash memory that stores various types of information. The storage unit 22 stores control programs such as an automatic traveling program for causing the operation control unit 21 to execute the automatic traveling processing (see FIG. 10). For example, the automatic traveling program is non-transiently recorded in a computer-readable recording medium such as a CD and a DVD, read by a predetermined reading device (not illustrated), and stored in the storage unit 22. Note that the automatic traveling program may be downloaded from a server (not illustrated) via the communication network N1 to the operation terminal 20 and stored in the storage unit 22.

The operation control unit 21 has control devices such as a CPU, a ROM, and a RAM. The CPU is a processor that executes various types of arithmetic processing. The ROM is a non-volatile storage unit that previously stores control programs such as a BIOS and an OS for causing the CPU to execute various types of arithmetic processing. The RAM is a volatile or non-volatile storage unit that stores various types of information and is used as a temporary storage memory (work region) for various types of processing executed by the CPU. The operation control unit 21 controls the operation terminal 20 by causing the CPU to execute various control programs previously stored in the ROM or the storage unit 22.

Specifically, as illustrated in FIG. 1, the operation control unit 21 includes various processing units such as a setting processing unit 211, a generation processing unit 212, an acquisition processing unit 213, and a correction processing unit 214. Note that the operation control unit 21 functions as the various processing units by causing the CPU to execute the various types of processing in accordance with the control programs. In addition, some or all of the processing units may be configured with electronic circuits. Note that the control programs may be programs that cause a plurality of processors to function as the processing units.

The setting processing unit 211 sets various types of setting information for causing the work vehicle 10 to perform automatic traveling. Specifically, the setting processing unit 211 sets information related to the work vehicle 10 (hereinafter, referred to as "work vehicle information"). The setting processing unit 211 sets information such as the type (model) of the work vehicle 10, the position where the positioning antenna 144 is mounted on the work vehicle 10, the type of the work implement, the size and shape of work implement, the position of the work implement with respect to the work vehicle 10, the vehicle speed and engine speed of the work vehicle 10 during work, the vehicle speed and engine speed of the work vehicle 10 during turning, and the like by the operator performing a registration operation on the operation terminal 20.

For example, the setting processing unit 211 causes the operation display unit 23 to display a menu screen D1 illustrated in FIG. 4. The operator selects, for example, "work implement registration" on the menu screen D1 to register work implement information related to the work implement. Although FIG. 2 illustrates a case where the work vehicle 10 is a potato harvester, the work vehicle 10 according to the present embodiment may include a tractor and a work implement (potato harvester) coupled to the tractor.

In addition, the setting processing unit 211 sets information related to the field F (hereinafter, referred to as "field information"). The setting processing unit 211 sets information about the position and the shape of the field F, the work start position S where the work starts, the work end position G where the work ends (see FIG. 3), a work direction, and the like by registration operation on the operation terminal 20. Note that the work direction means a direction in which the work vehicle 10 is caused to travel while performing the work with the work implement in a work area, which is an area acquired by excluding a headland and a non-work area from the field F. For example, the operator selects "field registration" on the menu screen D1 to register field information.

For example, the information about the position and the shape of the field F can be acquired automatically, for example, when the operator boards the work vehicle 10 and drives around the field F along an outer periphery thereof to record the transition of the position information of the positioning antenna 144 at the time. In addition, the position and the shape of the field F can be also acquired, based on a polygon obtained by the operator operating the operation terminal 20 with a map being displayed on the operation terminal 20 and designating a plurality of points on the map. An area specified by the acquired position and shape of the field F is an area (traveling area) in which the work vehicle 10 can travel.

In addition, the setting processing unit 211 sets information about how to specifically perform the work (hereinafter, referred to as "work information"). The setting processing unit 211 is also configured in such a way that presence or absence of a cooperative work between an unmanned work vehicle 10 and a manned work vehicle 10, the number of skips, which is the number of work routes to be skipped in a case where the work vehicle 10 turns around in a headland, a width of a headland, a width of a non-cultivated field, and the like are settable as work information. For example, the operator selects "work registration" on the menu screen D1 to register work information.

The generation processing unit 212 generates the target route R that is a route along which the work vehicle 10 is caused to travel automatically based on each of the setting information. The target route R is, for example, a work route from the work start position S to the work end position G (see FIG. 3). The target route R illustrated in FIG. 3 includes straight work routes R1 to R10 along which the work vehicle 10 travel back and forth in parallel in the field F, and turning routes R0 that connects the work routes to each other. The generation processing unit 212 generates and stores the target route R of the work vehicle 10 based on the setting information set in advance by the setting processing unit 211. For example, the operator selects "route creation" on the menu screen D1 and issues an instruction to generate the target route R.

When the target route R is generated, the generation processing unit 212 transfers the route data of the target route R to the work vehicle 10. Note that the generation processing unit 212 can generate and store a plurality of target routes R corresponding to work contents for one field F.

The route data transferred from the operation terminal 20 is stored in the storage unit 12 of the work vehicle 10. As a result, the work vehicle 10 can travel automatically along the target route R while positioning the current position of the work vehicle 10 by the positioning device 14.

The work vehicle 10 according to the present embodiment travels in a substantially rectangular field F as illustrated in FIG. 3. The work vehicle 10 is configured to be able to travel automatically when the current position thereof is located in the field F, and it is configured to be not able to travel automatically when the current position thereof is located outside the field F (e.g., on a public road or the like). In addition, the work vehicle 10 is configured to be able to travel automatically when conditions (automatic traveling start conditions), such as the current position matching the work start position S, the current position being within a predetermined range from the work start position S, and the orientation (azimuth) of the work vehicle 10 being within a predetermined angle with respect to the target route R, are satisfied, for example.

In a case where the automatic traveling start conditions are satisfied, when the operator presses the start button K1 on an operation screen D2 (see FIG. 5) of the operation terminal 20 to give a work start instruction, the work vehicle 10 starts automatic traveling and starts work (e.g., potato harvest work). That is, the work vehicle 10 permits automatic traveling when the automatic traveling start conditions are satisfied. Note that the automatic traveling start conditions are not limited to the above-described conditions.

When the automatic traveling of the work vehicle 10 is permitted, the vehicle control device 11 causes the work vehicle 10 to travel automatically from the work start position S to the work end position G based on the target route R. In addition, the vehicle control device 11 periodically outputs various measurement values (PTO rotation speed, vehicle speed, position information, etc.) to the operation terminal 20 while the work vehicle 10 travels automatically.

When the work vehicle 10 travels automatically, the operation control unit 21 displays map information including the field F, the target route R, the work start position S, the work end position G, and the current position of the work vehicle 10 on the operation screen D2 (see FIG. 5). In addition to the map information, the operation control unit 21 displays, on the operation screen D2, function icons such as a magnification icon for changing a display magnification of the map and an azimuth icon for changing an azimuth of the map, and display icons (notification icons) for displaying current states (measurement values and the like) of items such as a driving state, a vehicle-speed state, and a position state of the work vehicle 10.

Incidentally, when the work vehicle 10 is caused to travel automatically in accordance with the target route R, the target route R set in advance may be inappropriate due to the influence of the state of the field F and the state of the work objects (crops). For example, in a case where the target route R generated for the field F in which the potato harvest work is to be performed deviates from the potato harvest position, when the work vehicle 10 travels automatically in accordance with the target route R, the potatoes cannot be harvested or the potatoes may be trampled, which causes a problem of a decrease in work accuracy.

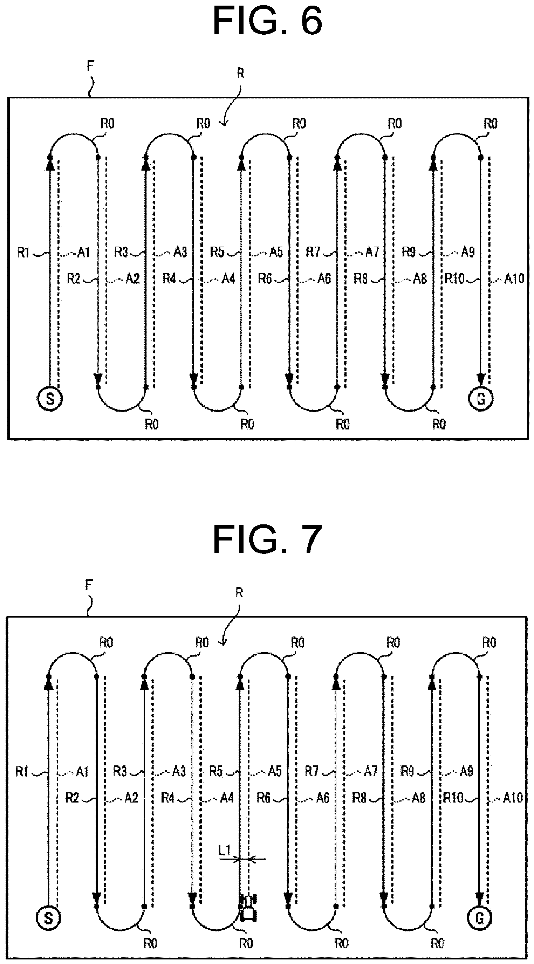

FIG. 6 illustrates a state in which the work routes R1 to R10 of the target route R are deviated to the left side with respect to the work rows A1 to A10 representing the positions where the potatoes are planted. Although FIG. 6 illustrates a state in which the entire work routes R1 to R10 is uniformly deviated from the work rows A1 to A10, a part of the work routes R1 to R10 may be deviated from their positions with respect to the work rows A1 to A10 due to the influence of the state of the field F and the state of the crops. In addition, the amount of deviation (position deviation amount) of each work route with respect to each work row may be the same or different. Further, each work route may have a different direction of deviation with respect to the work row.

In a case where the target route R is deviated from the harvest position (work row) of the potatoes as described above, the potatoes cannot be harvested appropriately or the potatoes may be trampled, which causes a problem of a decrease in work accuracy. In contrast, according to the configuration of the present embodiment, as described below, it is possible to improve the work accuracy of the work vehicle 10 capable of traveling automatically in accordance with the target route R.

Specifically, the operation control unit 21 is configured to acquire a correction position of the target route R and correct the target route R based on the correction position when a position deviation of the target route R occurs after the work vehicle 10 starts automatic traveling in accordance with the target route R.

To be more precise, the acquisition processing unit 213 of the operation control unit 21 acquires the correction position of the target route R.

For example, the acquisition processing unit 213 acquires, as the correction position, the current position of the work vehicle 10 at a time when a user operation of correcting the target route R is performed. For example, as illustrated in FIG. 7, in a case where the work vehicle 10 has finished the work on a work route R4 by automatic traveling and moved to a work route R5, when the operator determines that the target route R needs to be corrected due to a large position deviation (position deviation amount L1) between the work route R5 and a work row A5 which is the next harvest position, the operator switches to manual traveling and causes the work vehicle 10 to align with the beginning end of the work row A5 and stop temporarily. When the operator aligns the work vehicle 10 with the beginning end of the work row A5, the operator presses the start button K1 (see FIG. 5) on the operation screen D2. When the operator presses the start button K1, the acquisition processing unit 213 acquires the current position of the work vehicle 10 at a time when the user operation (pressing operation of the start button K1) for correcting the target route R is performed. Note that the acquisition processing unit 213 may obtain the current position of the work vehicle 10 at a time when the pressing operation of the start button K1 is performed while the work vehicle 10 travels manually.

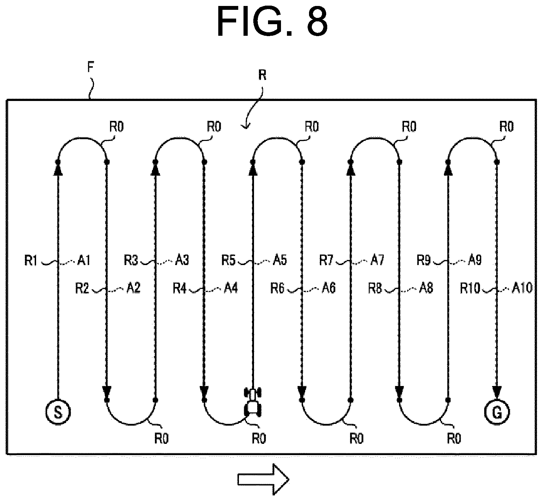

The correction processing unit 214 corrects the target route R based on the correction position acquired by the acquisition processing unit 213. Specifically, the correction processing unit 214 corrects the position of the target route R so that the target route R or an extension line of the target route R passes through the correction position. For example, the correction processing unit 214 causes the target route R to move parallelly so that the target route R or the extension line of the target route R passes through the correction position. Here, as illustrated in FIG. 8, the correction processing unit 214 causes the entire target route R to move parallelly to the right side by the position deviation amount L1 so that the work route R5 or an extension line of the work route R5 passes through the current position of the work vehicle 10.

When the correction processing unit 214 corrects the target route R, the correction processing unit 214 transfers the route data of the target route R after correction (see FIG. 8) to the work vehicle 10. The work vehicle 10 restarts automatic traveling in accordance with the target route R after correction. In addition, the correction processing unit 214 may update the target route R stored in the storage unit 22 to the target route R after correction.

In this way, when the operator switches from automatic traveling to manual traveling after the work vehicle 10 has started automatic traveling, causes the work vehicle 10 to move to an arbitrary position (e.g., a beginning end of a work row), and presses the start button K1, the correction processing unit 214 moves (corrects) the target route R to align with the current position of the work vehicle 10, and the work vehicle 10 restarts the automatic traveling of the work vehicle 10 in accordance with the target route R after correction. As a result, the target route R can be changed to a position intended by the operator, and thus the subsequent work can be appropriately performed.

In the above-described configuration, the pressing operation of the start button K1 serves as both the correction instruction of the target route R and the start (restart) instruction of the automatic traveling. That is, when the operator presses the start button K1 after causing the work vehicle 10 to move by switching from automatic traveling to manual traveling, the work vehicle 10 corrects the target route R and restarts the automatic traveling corresponding to the target route R after correction.

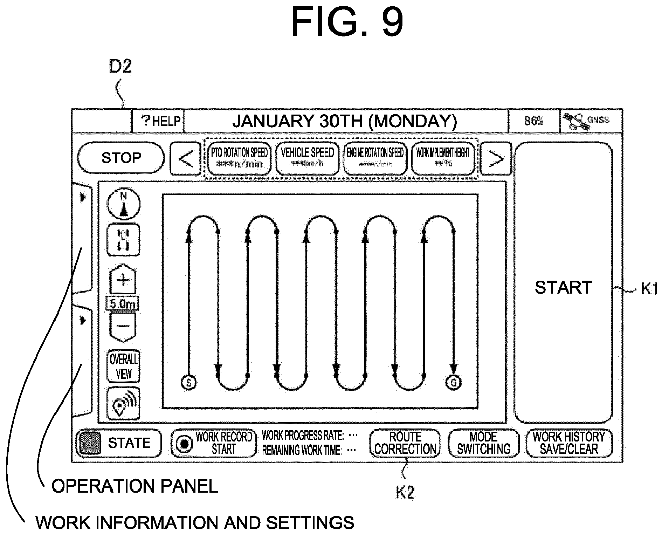

Here, the user operation of correcting the target route R is not limited to the pressing operation of the start button K1 on the operation screen D2, and may be a pressing operation of a dedicated reception button for receiving an instruction to correct the target route R. For example, as illustrated in FIG. 9, a route correction button K2 may be displayed on the operation screen D2. When the operator determines that it is necessary to correct the target route R, the operator switches to manual traveling, causes the work vehicle 10 to align with the beginning end of the work row A5 and stop temporarily, and then presses the route correction button K2 on the operation screen D2. When the operator presses the route correction button K2, the acquisition processing unit 213 acquires the current position of the work vehicle 10 at a time when the pressing operation of the route correction button K2 is performed. The correction processing unit 214 corrects the target route R based on the current position acquired by the acquisition processing unit 213. When the operator presses the start button K1 after the target route R is corrected, the work vehicle 10 restarts the automatic traveling corresponding to the target route R after correction.

In this way, when the operator switches from automatic traveling to manual traveling after the work vehicle 10 start automatic traveling, causes the work vehicle 10 to move to an arbitrary position (e.g., a beginning end of a work row), and presses the route correction button K2, the correction processing unit 214 moves (corrects) the target route R to align with the current positions of the work vehicle 10. Then, when the operator presses the start button K1, the work vehicle 10 restarts the automatic traveling of the work vehicle 10 in accordance with the target route R after correction.

The operation terminal 20 may be able to access a website of an agricultural support service (agricultural support site) provided by a server (not illustrated) via the communication network N1. In this case, the operation terminal 20 can function as an operation terminal of the server by executing a browser program by the operation control unit 21. Furthermore, the server includes each of the above-described processing units, and executes each of the processing.

### [Automatic Traveling Processing]

An example of the automatic traveling processing executed by the automatic traveling system 100 is to be described below with reference to FIG. 10.

Note that the present invention may be regarded as an invention of an automatic traveling method for executing one or more steps included in the automatic traveling processing. In addition, it is also possible to appropriately omit one or more steps included in the automatic traveling processing described herein. Note that each step in the above-mentioned automatic traveling processing may be executed in a different order as long as the same functional effect is acquired. Furthermore, although a case where the vehicle control device 11 and the operation control unit 21 execute each step in the above-mentioned automatic traveling processing is to be described here as an example, an automatic traveling method in which one or more processors execute each step in the automatic traveling processing in a distributed manner is also considered as another embodiment.

First, in step S1, the vehicle control device 11 determines whether or not a work start instruction is acquired. When work is started, the operator causes the work vehicle 10 to move to the work start position S (see FIG. 3) and presses the start button K1 (see FIG. 5) on the operation screen D2 of the operation terminal 20. When the operation control unit 21 accepts the pressing operation of the start button K1, the operation control unit 21 outputs a work start instruction to the work vehicle 10. When the vehicle control device 11 acquires the work start instruction from the operation terminal 20 (S1: Yes), the vehicle control device 11 shifts the processing to step S2. The vehicle control device 11 stands by until acquiring the work start instruction (S1: No).

In step S2, the vehicle control device 11 executes automatic traveling processing. Specifically, the vehicle control device 11 causes the work vehicle 10 to travel automatically in accordance with the target route R generated in the operation terminal 20 (see FIG. 3). For example, the vehicle control device 11 causes the work vehicle 10 to perform work (potato harvest work) in the field F while causing the work vehicle 10 to travel automatically in accordance with the target route R. Note that the vehicle control device 11 may be capable of accepting an operation of a speed change lever by an operator boarding the work vehicle 10. In this case, the vehicle control device 11 changes a vehicle speed of the work vehicle 10, which travels automatically, according to the operation of the operator.

Next, in step S3, the vehicle control device 11 determines whether or not a manual traveling instruction is received. When the operator determines that the position deviation between the work route and the harvest position (work row) is large and the target route R needs to be corrected, the operator performs an operation of switching automatic traveling to manual traveling. The operator may switch automatic traveling to manual traveling by a traveling mode switching lever (not illustrated) provided in the work vehicle 10, or may switch automatic traveling to manual traveling on the operation screen D2 of the operation terminal 20. In addition, the operator may be able to switch between automatic traveling and manual traveling by an operation of starting or stopping the work of the work unit 13. For example, when the operator engages a clutch to activate the work unit 13, the vehicle control device 11 switches from manual traveling to automatic traveling, and when the operator disengages the clutch, the vehicle control device 11 switches from automatic traveling to manual traveling. When the vehicle control device 11 accepts an operation for switching automatic traveling to manual traveling (manual traveling instruction) (S3: Yes), the vehicle control device 11 shifts the processing to step S4. On the other hand, in a case where the vehicle control device 11 does not accept the operation for switching automatic traveling to manual traveling (manual traveling instruction) (S3: No), the vehicle control device 11 shifts the processing to step S10.

In step S4, the vehicle control device 11 executes manual traveling processing. Specifically, the vehicle control device 11 causes the work vehicle 10 to travel based on manual steering by the operator.

For example, as illustrated in FIG. 7, in a case where the work vehicle 10 has finished the work on a work route R4 by automatic traveling and moved to the work route R5, when the operator determines that the target route R needs to be corrected due to the large position deviation (position deviation amount L1) between the work route R5 and the work row A5 which is the next harvest position, the operator switches to manual traveling and causes the work vehicle 10 to move to the beginning end of the work row A5.

In step S5, the operation control unit 21 determines whether or not a correction instruction of the target route R is received. For example, when the operator aligns the work vehicle 10 with the beginning end of the work row A5 and presses the start button K1 (see FIG. 5) on the operation screen D2, the operation control unit 21 receives a correction instruction of the target route R. As another embodiment, for example, when the operator aligns the work vehicle 10 with the beginning end of the work row A5 and presses the route correction button K2 (see FIG. 9) on the operation screen D2, the operation control unit 21 receives a correction instruction of the target route R.

When the operation control unit 21 receives the correction instruction of the target route R (S5: Yes), the operation control unit 21 shifts the processing to step S6. On the other hand, in a case where the operation control unit 21 does not receive the correction instruction of the target route R (S5: No), the operation control unit 21 shifts the processing to step S8.

In step S6, the operation control unit 21 acquires the current position (correction position) of the work vehicle 10. Specifically, the operation control unit 21 acquires the current position of the work vehicle 10 at the time of receiving the correction instruction for correcting the target route R (the pressing operation of the start button K1 or the route correction button K2).

Next, in step S7, the operation control unit 21 corrects the target route R. Specifically, the operation control unit 21 corrects the position of the target route R so that the target route R or the extension line of the target route R passes through the current position of the work vehicle 10. In the example illustrated in FIG. 7, the operation control unit 21 parallelly moves the target route R (work routes R1 to R10) to the right direction by the position deviation amount L1 so that the work route R5 or the extension line of the work route R5 passes through the current position of the work vehicle 10 (see FIG. 8).

Next, in step S8, the vehicle control device 11 determines whether or not an automatic traveling instruction is received. When the operator presses the start button K1 on the operation screen D2, the operation control unit 21 outputs an automatic traveling instruction to the work vehicle 10. The vehicle control device 11 acquires the automatic traveling instruction from the operation terminal 20.

In case of the configuration illustrated in FIG. 5, when the operator presses the start button K1, the operation control unit 21 corrects the target route R (S7), and the vehicle control device 11 receives an automatic traveling instruction (S8). As another example, the operation control unit 21 may correct the target route R by pressing the start button K1 for a first time, and may receive a start instruction of automatic traveling by pressing the start button K1 for a second time. As another example, in a case where the start button K1 is pressed for a long time, the operation control unit 21 may correct the target route R and receive a start instruction of automatic traveling, and in a case where the start button K1 is pressed for a short time, the operation control unit 21 may receive only a start instruction of automatic traveling. In addition, in case of the configuration illustrated in FIG. 9, when the operator presses the route correction button K2, the operation control unit 21 corrects the target route R (S7), and then, when the operator presses the start button K1, the vehicle control device 11 receives an automatic traveling instruction (S8).

When the start button K1 is pressed by the operator, the operation control unit 21 outputs the route data of the target route R after correction to the work vehicle 10. The vehicle control device 11 acquires the route data of the target route R after correction together with the automatic traveling instruction. In addition, when the vehicle control device 11 receives the automatic traveling instruction, the vehicle control device 11 switches the traveling mode from manual traveling to automatic traveling.

When the vehicle control device 11 receives the automatic traveling instruction (S8: Yes), the vehicle control device 11 shifts the processing to step S9. On the other hand, in a case where the vehicle control device 11 does not receive the automatic traveling instruction (S8: No), the vehicle control device 11 shifts the processing to step S5. The vehicle control device 11 continues the manual traveling processing until the automatic traveling instruction is received.

In step S9, the vehicle control device 11 restarts the automatic traveling processing. Specifically, the vehicle control device 11 causes the work vehicle 10 to restart the automatic traveling in accordance with the target route R corrected in the operation terminal 20 (see FIG. 8).

Next, in step S10, the vehicle control device 11 determines whether or not the work vehicle 10 has reached the work end position G (see FIG. 8). When the vehicle control device 11 determines that the work vehicle 10 has reached the work end position G (S10: Yes), the vehicle control device 11 ends the automatic traveling processing. When the vehicle control device 11 determines that the work vehicle 10 has not reached the work end position G (S10: No), the vehicle control device 11 shifts the processing to step S3. The vehicle control device 11 repeatedly executes the above processing until the work vehicle 10 reaches the work end position G (S10: No). In this way, the automatic traveling system 100 executes the above automatic traveling processing.

As described above, the automatic traveling system 100 according to the present embodiment executes generating the target route R along which the work vehicle 10 is caused to travel automatically, acquiring a correction position of the target route R, and correcting the target route R based on the correction position. For example, the automatic traveling system 100 acquires the current position of the work vehicle 10 at a time when a user operation of correcting the target route R is performed, and corrects (e.g., parallelly moves) the position of the target route R so that the target route R passes through the current position.

In addition, the automatic traveling system 100 causes the work vehicle 10 to travel automatically in accordance with the target route R generated in advance, and when the target route R is corrected, causes the work vehicle 10 to travel automatically in accordance with the target route R after correction.

According to the above configuration, when the target route R generated in advance does not coincide with the position intended by the operator, the position of the target route R can be corrected. As a result, it is possible to prevent a decrease in work accuracy due to the position deviation of the target route R. For example, when the target route R generated in advance deviates from the position of the crops (work row), the crops can be appropriately harvested by correcting the position of the target route R.

### [Other Embodiments]

The present invention is not limited to the above-described embodiment. Other embodiments of the present invention will be described below.

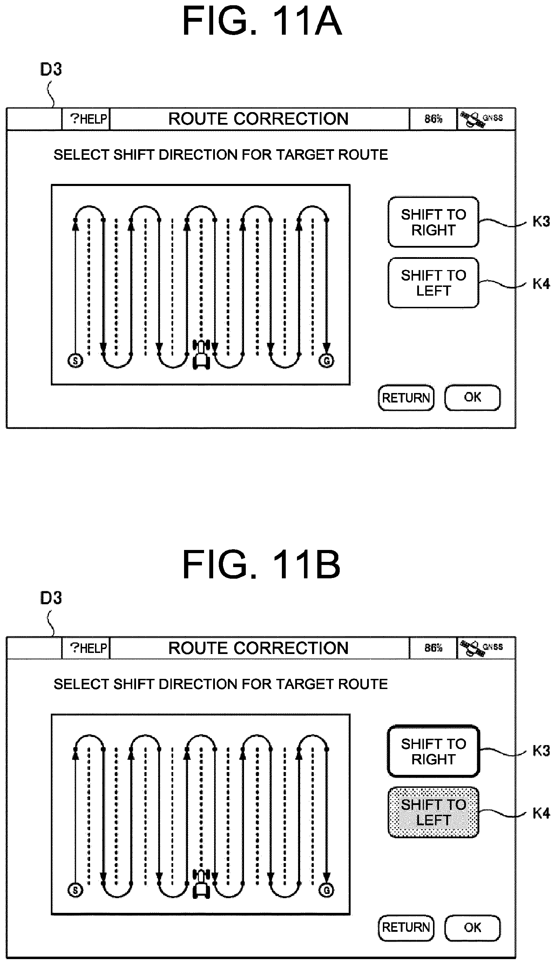

As another embodiment of the present invention, when the operation control unit 21 corrects the target route R, the operation control unit 21 may cause the target route R to move in a direction selected by the operator. Specifically, the operation control unit 21 causes the target route R to move parallelly so that a work route selected by the operator among the plurality of work routes R1 to R10 included in the target route R or the extension line of the work route passes through the correction position (e.g., the current position of the work vehicle 10). For example, when the operator switches to manual traveling, causes the work vehicle 10 to align with the beginning end of the work row A5 and stop temporarily, and presses the start button K1 (see FIG. 5) or the route correction button K2 (see FIG. 9) on the operation screen D2, the operation control unit 21 causes a route correction screen D3 illustrated in FIG. 11A to be displayed. The operation control unit 21 causes selection buttons K3 and K4 for selecting a movement direction (shift direction) of the target route R to be displayed on the route correction screen D3. When the operator presses the selection button K3 on the route correction screen D3, the operation control unit 21 causes the target route R to move to the right direction so that the work route coincides with the current position of the work vehicle 10. When the operator presses the selection button K4, the operation control unit 21 causes the target route R to move to the left direction so that the work route coincides with the current position of the work vehicle 10.

The operation control unit 21 may automatically determine the movement direction of the target route R. Specifically, the operation control unit 21 causes the target route R to move parallelly so that, among a plurality of work routes included in the target route R, a work route that is set in a direction identical to the orientation of the work vehicle 10 and is closest to the correction position (e.g., the current position of the work vehicle 10) or the extension line of the work route passes through the correction position. For example, in the example illustrated in FIG. 7, the work routes R1, R3, R5, R7, and R9 coincide with the orientation (traveling direction) of the work vehicle 10. In addition, among the work routes R1, R3, R5, R7, and R9, the work route R5 is closest to the current position of the work vehicle 10. In this case, the operation control unit 21 determines the movement direction of the target route R to be the right direction and corrects the position of the target route R, so that the work route R5 passes through the current position of the work vehicle 10. For example, as illustrated in FIG. 11B, the operation control unit 21 may cause only the selection button K3 for one determined direction (here, the right direction) to be displayed in a selectable manner, and the selection button K4 for the other direction (here, the left direction) to be displayed in a non-selectable manner (displayed in a grayed-out manner).

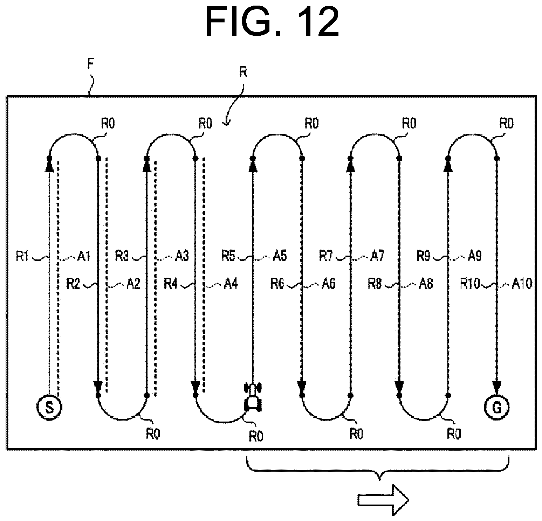

As another embodiment of the present invention, when the operation control unit 21 corrects the target route R, the operation control unit 21 may correct only a part of the plurality of work routes R1 to R10 included in the target route R. For example, as illustrated in FIG. 12, among the work routes R1 to R10, the operation control unit 21 corrects (parallelly moves) only the work routes (here, the work routes R5 to R10) included in from the current position of the work vehicle 10 at a time when the operation of correcting the target route R is performed to the work end position G.

In addition, as another embodiment, when the operation control unit 21 has corrected the target route R, the operation control unit 21 may reflect the target route R after correction in the next and subsequent work routes. For example, when the operation control unit 21 has corrected the target route R in work such as plowing or ridging, the operation control unit 21 sets the target route R after correction as the target route of the next work (planting work, seeding work, or the like), and further sets the target route R after correction as the target route of the subsequent harvest work. Further, for example, when the operation control unit 21 has corrected the target route R in harvest work, the operation control unit 21 sets the target route R after correction as the target route of harvest work in the next harvest season.

In addition, as another embodiment, among the work routes R1 to R10, the operation control unit 21 may correct only the work route closest to the current position of the work vehicle 10 at a time when an operation of correcting the target route R is performed, that is, the work route (here, the work route R5) to be traveled first after restarting automatic traveling. In addition, as another embodiment, the operation control unit 21 may correct only one or more work routes selected by the operator among the work routes R1 to R10.

In addition, as another embodiment, the operation control unit 21 may vary a correction amount (movement amount) of the target route R. In the above embodiments, the operation control unit 21 uniformly causes the plurality of work routes to move by the position deviation amount L1, but in another embodiment, the operation control unit 21 may decrease the correction amount of the work routes as the work vehicle 10 goes from its current position to the work end position G. In each of the above embodiments, the operator may be able to set the work route to be corrected among the plurality of work routes R1 to R10, or the operator may be able to set the correction amount of the target route R.

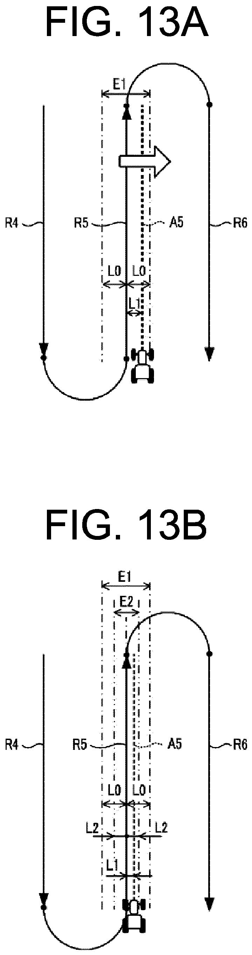

As another embodiment of the present invention, the operation control unit 21 may set an upper limit value of the correction amount (upper limit correction amount) of the target route R. Specifically, the operation control unit 21 corrects the target route R when the shortest distance (the position deviation amount L1) to the target route R (the work route) closest to the current position of the work vehicle 10 is equal to or less than a first predetermined value. For example, as illustrated in FIG. 13A, the operation control unit 21 corrects the target route R when the position deviation amount L1 (shortest distance) to the work route R5 closest to the current position of the work vehicle 10 is equal to or less than a first predetermined value L0. That is, the operation control unit 21 permits the correction of the target route R when the current position of the work vehicle 10 is located within a range E1 that is centered on the target route R (work route R5) and is defined by the first predetermined value L0 in the left and right directions (width direction perpendicular to the work direction), respectively.

On the other hand, the operation control unit 21 prohibits the correction of the target route R when the position deviation amount L1 to the work route R5 closest to the current position of the work vehicle 10 exceeds the first predetermined value L0, that is, when the current position of the work vehicle 10 is located outside the range E1.

According to the above configuration, excessive change of the target route R can be avoided. In the above configuration, the first predetermined value L0 may be set by the operator.

As another embodiment of the present invention, the operation control unit 21 may set a lower limit value of the correction amount of the target route R. Specifically, the operation control unit 21 does not correct the target route R when the shortest distance (position deviation amount L1) to the target route R (work route) closest to the current position of the work vehicle 10 is less than a second predetermined value L2. For example, as illustrated in FIG. 13B, the operation control unit 21 corrects the target route R when the position deviation amount L1 (shortest distance) to the work route R5 closest to the current position of the work vehicle 10 is equal to or less than the first predetermined value L0 and equal to or more than the second predetermined value L2, and does not correct the target route R when the position deviation amount L1 exceeds the first predetermined value L0 or is less than the second predetermined value L2 (see FIG. 13B). That is, the operation control unit 21 permits the correction of the target route R when the current position of the work vehicle 10 is located within the range E1 and outside the range E2. The range E1 is centered on the target route R (work route R5) and is defined by the first predetermined value L0 in the left and right directions (width direction perpendicular to the work direction), respectively. The range E2 is centered on the target route R (work route R5) and is defined by the second predetermined value L2 in the left and right directions (width direction perpendicular to the work direction), respectively.

On the other hand, the operation control unit 21 prohibits the correction of the target route R when the current position of the work vehicle 10 is located outside the range E1 or when the current position of the work vehicle 10 is located within the range E2. In the above configuration, the first predetermined value L0 and the second predetermined value L2 may be set by the operator. By providing the lower limit value (the second predetermined value L2), it is possible to prevent the correction processing of the target route R from being executed even though the position deviation amount L1 is to the extent that the target route R does not need to be corrected.

For example, in a case where the range E2 is set to an allowable range of a lateral deviation for permitting the start of the automatic traveling and the correction processing of the target route R is set to be executed by the operation of the start instruction of the automatic traveling, when the operator performs the start operation of the automatic traveling in a state where the work vehicle 10 is located in the range E2, the target route R is corrected and the automatic traveling is started although the operator wants to start the automatic traveling without correcting the target route R. In this regard, as described above, it is possible to start the automatic traveling without correcting the target route R by adopting a configuration in which correction of the target route R is prohibited when the work vehicle 10 is located within the range E2. In a case where the target route R is set to be corrected by a switch for correcting the target route R (for route correction), an operation method for route correction (e.g., a long press on an automatic traveling start switch), or the like, the above configuration (the configuration in which the correction of the target route R is prohibited when the work vehicle is located within the range E2) may be omitted. In addition, when the work vehicle 10 is located within the range E2, the acceptance of the switch for route correction or the acceptance of the operation for route correction may be prohibited.

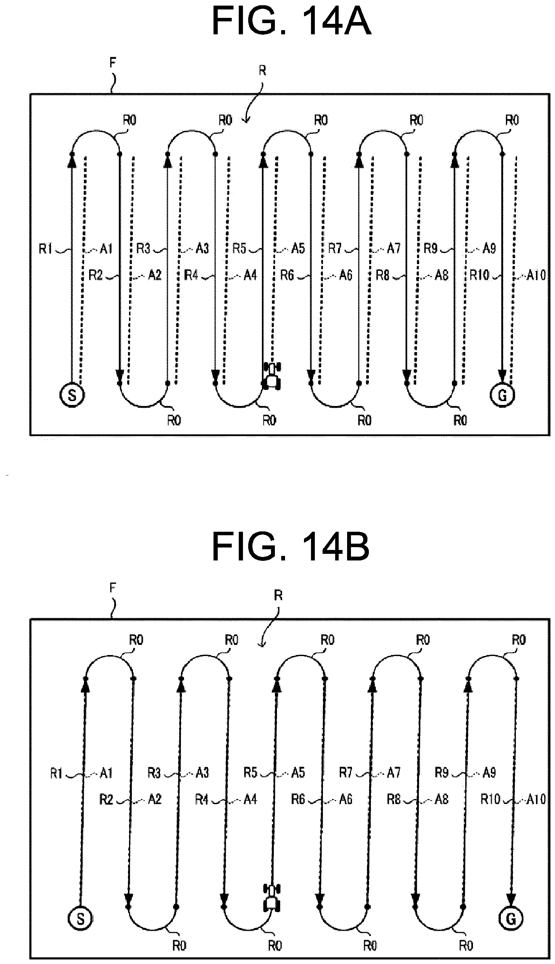

In the above embodiments, the operation control unit 21 causes the target route R to move parallelly. However, as another embodiment, the operation control unit 21 may cause the target route R to move rotationally. Specifically, the operation control unit 21 corrects the orientation of the target route R based on the orientation (azimuth) of the work vehicle 10 at the current position of the work vehicle 10 at a time when the user operation of correcting the target route R is performed. For example, as illustrated in FIG. 14A, when the orientation of the target route R does not coincide with the orientation of the work row, the operator aligns the orientation of the work vehicle 10 with the orientation of the work row (work row A5) by manual traveling. Then, when the operator presses the start button K1 (see FIG. 5) or the route correction button K2 (see FIG. 9) on the operation screen D2, the operation control unit 21 causes a part or all of the target route R to move rotationally so that the orientation of the work route R5 coincides with the orientation of the work vehicle 10 (the orientation of the work row A5) as illustrated in FIG. 14B. In addition, when the position of the work route R5 does not coincide with the position of the work row A5, the operation control unit 21 causes a part or all of the target route R to move parallelly. In this way, the operation control unit 21 corrects the target route R based on the current position and the orientation at the current position of the work vehicle 10.

For example, in a case where the correction processing of the target route R is set to be executed by the operation of the start instruction of the automatic traveling, the operation control unit 21 may be configured to start the automatic traveling without changing the azimuth of the target route R when the operator performs the start operation of the automatic traveling in a state where an azimuth deviation of the work vehicle 10 with respect to the target route R is within a range in which the start of the automatic traveling can be permitted. In a case where the target route R is set to be corrected by a switch for correcting the target route R (for route correction), an operation method for route correction (e.g., a long press on an automatic traveling start switch), or the like, the above configuration (the configuration of prohibiting correction of the target route R when the azimuth deviation of the work vehicle 10 is within a range in which the start of the automatic traveling can be permitted) may be omitted. In addition, when the azimuth deviation of the work vehicle 10 is within a range in which the start of the automatic traveling can be permitted, the acceptance of the switch for route correction or the acceptance of the operation for route correction may be prohibited.

In addition, in a case where the target route R can be moved parallelly or moved rotationally (changed in azimuth) by one switch (operation tool), the operation control unit 21 may be configured to allow the user to select which of the parallel movement and the rotational movement is to be executed, may be configured to allow both the parallel movement and the rotational movement to be executed by one operation, or may set different operation methods (a short press for the parallel movement, a long press for the rotational movement, and the like) for one switch. In addition, a switch for parallel movement and a switch for rotational movement may be provided individually.

Here, the operation control unit 21 is configured to distinguishably display (e.g., fill-in display) a worked area in which the work vehicle 10 have performed work on the operation screen D2 (see FIG. 5 and the like).

In this case, for example, when the work vehicle 10 starts the automatic traveling and the work from the work start position S and corrects the target route R in the direction of the work end position G on the way, a gap may be generated between an area in which the work is performed in accordance with the target route R before correction and an area in which the work is performed in accordance with the target route R after correction, and the gap is apparently displayed as an unworked region on the operation screen D2. As another embodiment of the present invention, in a configuration in which a worked area where the work vehicle 10 has performed work and an unworked area where the work vehicle 10 has not performed work are displayed in a distinguishable manner, when an unworked area exists between a worked area where the work vehicle 10 has performed work in accordance with the target route R before correction and a worked area where the work vehicle 10 has performed work in accordance with the target route R after correction, the operation control unit 21 may display the existing unworked area as a worked area. Note that the operation control unit 21 may display the unworked area as a worked area according to an operation of the operator. Thus, it is possible to suppress the display of an unnecessary unworked area.

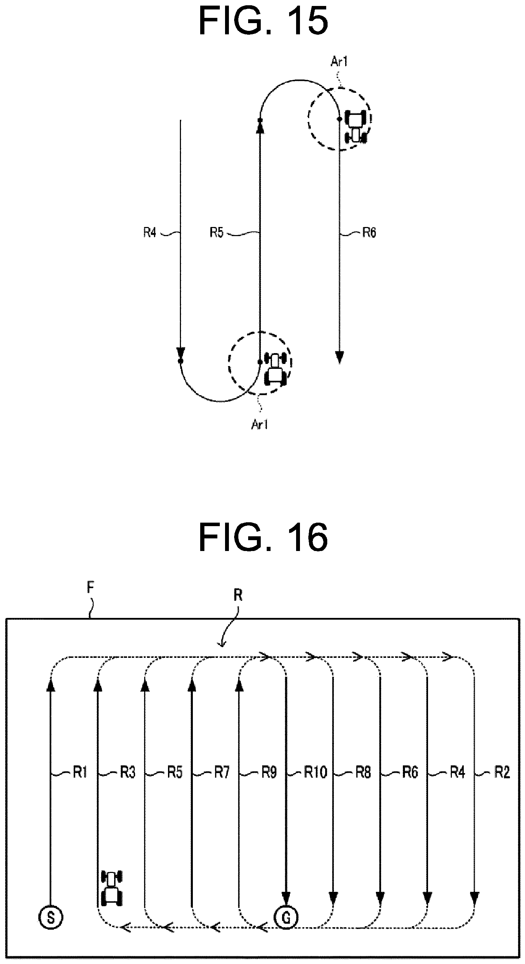

As another embodiment of the present invention, the operation control unit 21 may be capable of setting a location (range) where an operation of correcting the target route R can be accepted. Specifically, the operation control unit 21 permits the acceptance of the user operation of correcting the target route R when the work vehicle 10 is located within a predetermined range set based on the beginning end of each of the plurality of work routes included in the target route R, and prohibits the acceptance of the user operation of correcting the target route R when the work vehicle 10 is not located within the predetermined range. For example, as illustrated in FIG. 15, the operation control unit 21 permits the acceptance of the user operation of correcting the target route R when the work vehicle 10 is located within a predetermined range Ar1 set based on the beginning end of the work route R5, and prohibits the acceptance of the user operation of correcting the target route R when the work vehicle 10 is not located within the predetermined range Ar1. That is, the operation control unit 21 executes the correction processing of the target route R on condition that the work vehicle 10 is located within the predetermined range Ar1. The predetermined range Ar1 may be settable by the operator.

As another embodiment of the present invention, a correction target of the target route R may be determined according to the traveling method of the work vehicle 10. For example, as illustrated in FIG. 16, in a case where the work vehicle 10 travels back and forth from the work start position S to the work end position G along the work routes R1 to R10 in this order from outside to inside, the operation control unit 21 corrects (parallelly moves) only the work routes R1, R3, R5, R7, and R9 in the same work direction as the work route R3 close to the current position of the work vehicle 10 at a time when the user operation of correcting the target route R is performed, and does not correct (parallelly move) the work routes R2, R4, R6, R8, and R10 whose work directions are different from that of the work route R3.

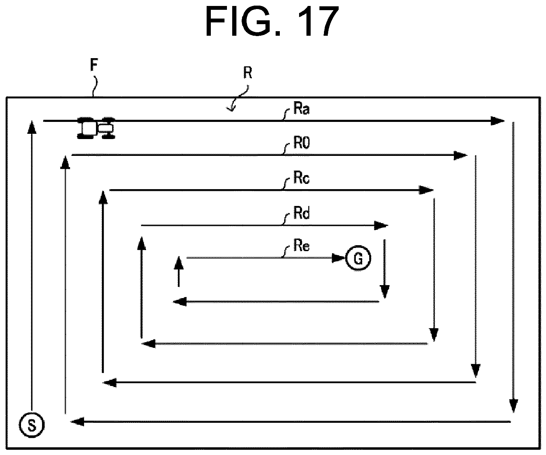

Similarly, as illustrated in FIG. 17, when the work vehicle 10 travels from the work start position S to the work end position G in a spiral shape from outside to inside, the operation control unit 21 corrects (parallelly moves) only work routes Ra, Rb, Rc, Rd, and Re in the same work direction as the work route Ra close to the current position of the work vehicle 10 at a time when the user operation of correcting the target route R is performed, and does not correct (parallelly move) the other work routes whose work directions are different from that of the work route Ra.

In each of the above embodiments, the operation control unit 21 corrects the target route R based on the current position of the work vehicle 10. As another embodiment, the operation control unit 21 may correct the target route R based on a position of the work object. Specifically, the acquisition processing unit 213 of the operation control unit 21 acquires the position of the work row closest to the current position of the work vehicle 10 at a time when the user operation of correcting the target route R is performed. In the example illustrated in FIG. 7, the acquisition processing unit 213 obtains, as the correction position, the beginning end of the work row A5 closest to the current position of the work vehicle 10 at a time when the user operation of correcting the target route R is performed. The acquisition processing unit 213 may acquire the position (beginning end position) of the work row based on images captured by a camera mounted on the work vehicle 10 or a flying object (drone), or may acquire the position of the work row based on work history data of planting work (planting work or the like) of the crops. The correction processing unit 214 corrects the position of the target route R so that the target route R or the extension line of the target route R passes through the correction position (the beginning end of the work row A5). When the orientation of the target route R is corrected, the correction processing unit 214 corrects the orientation of the target route R so that the target route R or the extension line of the target route R passes through the correction position (the beginning end of the work row A5). As described above, the correction position of the present invention may be the current position of the work vehicle 10 or the position of the work object.

Here, in a case where the work vehicle 10 is configured by a tractor, and a work implement that can be raised and lowered is connected to the tractor, the work vehicle 10 may perform automatic traveling in interlocking with the raising and lowering motion of the work implement. For example, when the operator performs an operation to lower the work implement, the work vehicle 10 starts automatic traveling and drives the work implement to start work. In this configuration, the operation control unit 21 may correct the target route R based on the lowering operation of the work implement. Specifically, when the operator raises the work equipment and switches automatic traveling to manual traveling, and then moves the work vehicle 10 to an arbitrary position (e.g., the beginning end of the work row) and lowers the work equipment, the operation control unit 21 moves (corrects) the target route R to align with the current position of the work vehicle 10, and the work vehicle 10 restarts the automatic traveling of the work vehicle 10 in accordance with the target route R after correction.

### [Supplementary Notes of Invention]

Supplementary Notes will hereinafter be made on the summary of the invention that is extracted from each of the above-described embodiments. Note that each configuration and processing function described in the supplementary notes below may be selected, omitted, and combined as appropriate.

### <Supplementary Note 1>

A route generation method comprising:
generating a target route along which a work vehicle is caused to travel automatically;
acquiring a correction position of the target route; and
correcting the target route based on the correction position.

### <Supplementary Note 2>

The route generation method according to supplementary note 1, wherein a current position of the work vehicle at a time when a user operation of correcting the target route is performed is acquired as the correction position.

### <Supplementary Note 3>

The route generation method according to supplementary note 1 or 2, wherein a position of a work object is acquired as the correction position.

### <Supplementary Note 4>

The route generation method according to any one of supplementary notes 1 to 3, wherein a position of the target route is corrected so that the target route or an extension line of the target route passes through the correction position.

### <Supplementary Note 5>

The route generation method according to any one of supplementary notes 1 to 4, wherein the target route is parallelly moved so that the target route or an extension line of the target route passes through the correction position.

### <Supplementary Note 6>

The route generation method according to supplementary note 5, wherein the target route is parallelly moved so that a work route selected by a user from among a plurality of work routes included in the target route or an extension line of the work route passes through the correction position.

### <Supplementary Note 7>

The route generation method according to supplementary note 5 or 6, wherein the target route is parallelly moved so that, among a plurality of work routes included in the target route, a work route that is set in a direction identical to an orientation of the work vehicle and is closest to the correction position or an extension line of the work route passes through the correction position.

### <Supplementary Note 8>

The route generation method according to any one of supplementary notes 2 to 7, wherein the target route is corrected when a shortest distance to the target route closest to the current position of the work vehicle is equal to or less than a first predetermined value.

### <Supplementary Note 9>

The route generation method according to supplementary note 8, wherein the target route is not corrected when the shortest distance to the target route closest to the current position of the work vehicle is less than a second predetermined value that is smaller than the first predetermined value.

### <Supplementary Note 10>

The route generation method according to any one of supplementary notes 2 to 9, wherein an orientation of the target route is corrected based on an orientation of the work vehicle at the current position of the work vehicle at the time when the user operation of correcting the target route is performed.

### <Supplementary Note 11>

The route generation method according to any one of supplementary notes 1 to 10, further comprising:
displaying a worked area in which the work vehicle has performed work and an unworked area in which the work vehicle has not performed work in a distinguishable manner, the worked area and the unworked area being included in a work area,
wherein, when an unworked area exists between a worked area in which the work vehicle has performed work in accordance with the target route before correction and a worked area in which the work vehicle has performed work in accordance with the target route after correction, the existing unworked area is displayed as a worked area.

### <Supplementary Note 12>

The route generation method according to any one of supplementary notes 1 to 11, wherein acceptance of a user operation of correcting the target route is permitted when the work vehicle is located within a predetermined range set based on a beginning end of each of a plurality of work routes included in the target route, and acceptance of a user operation of correcting the target route is prohibited when the work vehicle is not located within the predetermined range.

### REFERENCE SIGNS LIST

100 : Automatic traveling system
10 : Work vehicle
11 : Vehicle control device
12 : Storage unit
13 : Work unit
14 : Positioning device
15 : Communication unit
20 : Operation terminal
21 : Operation control unit
22 : Storage unit
23 : Operation display unit
24 : Communication unit
211 : Setting processing unit
212 : Generation processing unit
213 : Acquisition processing unit
214 : Correction processing unit
Ar1 : Predetermined range
D1 : Menu screen
D2 : Operation screen
D3 : Route correction screen
F : Field
S : Work start position
G : Work end position
R : Target route
R1 to R10 : Work routes
A1 to A10 : Work rows
K1 : Start button
K2 : Route correction button
K3 : Selection button
K4 : Selection button
L1 : Position deviation amount
L0 : First predetermined value
L2 : Second predetermined value
E1 : Range
E2 : Range

## Claims

1. A route generation method comprising:
generating a target route along which a work vehicle is caused to travel automatically;
acquiring a correction position of the target route; and
correcting the target route based on the correction position.

2. The route generation method according to claim 1, wherein a current position of the work vehicle at a time when a user operation of correcting the target route is performed is acquired as the correction position.

3. The route generation method according to claim 1, wherein a position of a work object is acquired as the correction position.

4. The route generation method according to claim 1, wherein a position of the target route is corrected so that the target route or an extension line of the target route passes through the correction position.

5. The route generation method according to any one of claims 1 to 4, wherein the target route is parallelly moved so that the target route or an extension line of the target route passes through the correction position.

6. The route generation method according to claim 5, wherein the target route is parallelly moved so that a work route selected by a user from among a plurality of work routes included in the target route or an extension line of the work route passes through the correction position.

7. The route generation method according to claim 5, wherein the target route is parallelly moved so that, among a plurality of work routes included in the target route, a work route that is set in a direction identical to an orientation of the work vehicle and is closest to the correction position or an extension line of the work route passes through the correction position.

8. The route generation method according to claim 2, wherein the target route is corrected when a shortest distance to the target route closest to the current position of the work vehicle is equal to or less than a first predetermined value.

9. The route generation method according to claim 8, wherein the target route is not corrected when the shortest distance to the target route closest to the current position of the work vehicle is less than a second predetermined value that is smaller than the first predetermined value.

10. The route generation method according to claim 2, wherein an orientation of the target route is corrected based on an orientation of the work vehicle at the current position of the work vehicle at the time when the user operation of correcting the target route is performed.

11. The route generation method according to claim 1, further comprising:
displaying a worked area in which the work vehicle has performed work and an unworked area in which the work vehicle has not performed work in a distinguishable manner, the worked area and the unworked area being included in a work area,
wherein, when an unworked area exists between a worked area in which the work vehicle has performed work in accordance with the target route before correction and a worked area in which the work vehicle has performed work in accordance with the target route after correction, the existing unworked area is displayed as a worked area.

12. The route generation method according to claim 1, wherein acceptance of a user operation of correcting the target route is permitted when the work vehicle is located within a predetermined range set based on a beginning end of each of a plurality of work routes included in the target route, and acceptance of a user operation of correcting the target route is prohibited when the work vehicle is not located within the predetermined range.

13. A route generation system comprising:
a generation processing unit that generates a target route along which a work vehicle is caused to travel automatically;
an acquisition processing unit that acquires a correction position of the target route; and
a correction processing unit that corrects the target route based on the correction position.

14. A route generation program for causing one or more processors to execute:
generating a target route along which a work vehicle is caused to travel automatically;
acquiring a correction position of the target route; and
correcting the target route based on the correction position.
